# FASCICULE DE BREVET EUROPEEN

(11) **EP 3 596 360 B1**
(45) Date de publication et mention de la délivrance du brevet: **12.01.2022**
(21) Numéro de dépôt: 18727854.4
(22) Date de dépôt: 02.05.2018
(51) Int. Cl.: F16H 57/08, F16H 55/17

(54) **REDUCTEUR DE VITESSE DEBRAYABLE**
AUSRÜCKBARE DREHZAHLREDUZIERENDE EINHEIT
DISENGAGEABLE SPEED-REDUCING UNIT

(30) Priorité: 04.05.2017 FR 1753956
(43) Date de publication de la demande: 22.01.2020
(73) Titulaire: Safran Transmission Systems, 92700 Colombes (FR)
(72) Inventeur: BECK, Guillaume Julien, 77550 Moissy-Cramayel (FR); MORELLI, Boris Pierre Marcel, 77550 Moissy-Cramayel (FR)
(74) Mandataire: Brevalex
(86) Numéro de dépôt international: PCT/FR2018/051084
(87) Numéro de publication internationale: WO 2018/202990

(56) Documents cités:
- EP-A1- 0 090 326
- WO-A1-2013/124590
- WO-A1-2017/129926
- CN-B- 103 192 241
- US-A1- 2013 225 353

## Description

### DOMAINE TECHNIQUE

L'invention concerne un réducteur de vitesse pour turbomachine d'aéronef qui comporte des moyens dits fusibles permettant de désaccoupler les éléments liés par le réducteur.

L'invention concerne plus particulièrement un réducteur de vitesse et de transmission de couple d'entrainement entre un arbre de la turbine basse pression et la soufflante de la turbomachine qui est du type à train épicycloïdal qui comporte lesdits moyens fusibles.

### ÉTAT DE LA TECHNIQUE ANTÉRIEURE

Dans une turbomachine d'aéronef, l'arbre basse pression de la turbomachine, qui relie la turbine basse pression au compresseur basse pression, est aussi relié à une soufflante de la turbomachine.

Un réducteur est interposé entre l'arbre basse pression et la soufflante, pour effectuer une réduction de vitesse de rotation. De manière conventionnelle, le réducteur est un réducteur à train épicycloïdal comportant un pignon central solaire accouplé à l'arbre basse pression et un porte satellites qui est accouplé à la soufflante.

La couronne extérieure est fixe et est reliée à un carter de la turbomachine.

En fonctionnement, certaines pièces de la ligne basse pression qui vient d'être définie précédemment peuvent se bloquer, bloquant ainsi le réducteur. C'est par exemple le cas du grippage des paliers de satellites reliant chaque satellite au porte satellite, l'ingestion d'un corps étranger ou blocage ou freinage dans la ligne basse pression, provoqué par une casse d'une aube par exemple.

Un tel blocage d'une pièce du système peut provoquer la rupture d'une autre pièce de ce système, et aussi provoquer un blocage de la soufflante, entrainant alors une augmentation de la trainée de la turbomachine et nuisant à la manœuvrabilité de l'aéronef.

Pour empêcher un tel blocage du réducteur, il a été proposé d'incorporer dans la ligne basse pression un ou plusieurs dispositifs de sécurité qui se rompent en cas de blocage.

De tels dispositifs de sécurité, communément appelés dispositifs fusibles, peuvent être placés en tout endroit dans la ligne basse pression.

Cependant, la conception de ces dispositifs fusibles est difficile à réaliser ainsi qu'à mettre en œuvre puisque l'introduction de tels éléments dans la ligne basse pression correspond à introduire dans la ligne une ou plusieurs zones souples, nuisant ainsi au comportement dynamique de la ligne. Un réducteur selon le préambule de la revendication 1 est connu de WO 2013/124590 A1.

L'invention a pour but de proposer un réducteur de vitesse qui permet d'assurer la fonction de fusible mécanique sans introduire de zone souple dans la ligne basse pression.

### EXPOSÉ DE L'INVENTION

L'invention propose un réducteur de vitesse en particulier pour la transmission de couple entre une turbine à gaz et une soufflante dans une turbomachine, comportant une couronne annulaire coaxiale à un axe principal du réducteur de vitesse et présentant une denture radialement interne, au moins un pignon qui est accouplé avec la couronne et qui comporte une denture radialement externe complémentaire de la denture de la couronne annulaire, dans lequel la couronne comporte deux demi-couronnes annulaires décalées l'une par rapport à l'autre le long de l'axe principal du réducteur de vitesse et qui sont accouplées avec ledit au moins un pignon et une platine de support des deux demi-couronnes par rapport à laquelle les deux demi-couronnes sont immobiles en rotation autour de l'axe principal du réducteur de vitesse chaque demi-couronne comportant une denture interne hélicoïdale inclinée dans une direction opposée à la direction d'inclinaison de la denture de l'autre demi-couronne, dans lequel chaque demi-couronne est reliée à la platine de support de manière à pouvoir être désaccouplée dudit au moins un pignon lorsque ledit au moins un pignon exerce sur chaque demi-couronne une action de débrayage dont l'amplitude est supérieure à une valeur d'amplitude déterminée.

La liaison des demi-couronnes entre elles et avec la platine de support permet d'assurer la fonction de fusible mécanique tout en permettant d'avoir un système rigide lorsque les demi-couronnes sont solidaires l'une de l'autre. Il n'y a donc pas de zone souple induite par cette solution.

Selon l'invention, chaque demi-couronne est montée coulissante par rapport à la platine de support selon une direction parallèle à l'axe principal du réducteur de vitesse entre une position accouplée dans laquelle ladite demi-couronne est accouplée avec ledit au moins un pignon et une position désaccouplée dans laquelle ladite demi-couronne est désaccouplée dudit au moins un pignon,
et le réducteur de vitesse comporte des moyens de retenue de ladite demi-couronne dans sa position accouplée, lesdits moyens de retenue étant aptes à être désengagés pour permettre un déplacement de ladite demi-couronne vers la position désaccouplée lorsque ledit au moins un pignon exerce sur chaque demi-couronne ladite action de débrayage.

De préférence, les moyens de retenue comportent au moins un organe d'appui associé à chaque demi-couronne qui est en appui axialement contre une face d'appui de la demi-couronne qui lui est associée, et qui est apte à changer d'état lorsque ledit au moins un pignon exerce sur la demi-couronne ladite action de débrayage.

De préférence, l'organe d'appui consiste en un anneau d'arrêt déformable associé à chaque demi-couronne qui est en appui contre ladite face d'appui de la demi-couronne qui lui est associée et qui est porté par une tige orientée parallèlement à l'axe principal du réducteur de vitesse et qui traverse un orifice axial réalisé dans les deux demi-couronnes,

De préférence, l'organe d'appui comporte une butée fusible qui est apte se rompre lorsque ledit au moins un pignon exerce sur la demi-couronne ladite action.

De préférence, la butée fusible comporte une portion de fixation de la butée fusible à la platine de support et une portion d'appui de la butée fusible contre ladite face d'appui de la demi-couronne.

De préférence, les moyens de retenue comportent un organe de butée associé à chaque demi-couronne qui est apte à coopérer avec la demi-couronne associée lorsqu'elle est dans sa position désaccouplée.

De préférence, l'organe de butée comporte une rondelle reçue dans une gorge associée formée dans une extrémité de la tige associée à ladite demi-couronne.

De préférence, l'organe de butée comporte au moins une butée à bille agencée dans une cannelure de la platine de support qui est apte à coopérer avec la demi-couronne associée lorsqu'elle est dans l'une de la position désaccouplée et de la position accouplée.

De préférence, chaque demi-couronne est entrainée en déplacement vers sa position désaccouplée par l'intermédiaire de l'effort axial résultant de l'action dudit au moins un pignon sur la denture hélicoïdale de la demi-couronne.

De préférence, le réducteur de vitesse comporte des moyens supplémentaires d'entrainement de chaque demi-couronne en déplacement vers sa position désaccouplée.

De préférence, lesdits moyens supplémentaire d'entrainement comportent un ressort de compression qui est comprimé axialement entre les deux demi-couronnes.

De préférence, le réducteur de vitesse consiste en un réducteur du type à train épicycloïdal et ladite couronne est la couronne annulaire externe du train épicycloïdal et ledit au moins un pignon consiste en une pluralité de pignons satellites reliés les uns aux autres par un porte satellites.

L'invention propose aussi une turbomachine d'aéronef comportant une turbine basse pression, un arbre basse pression qui est accouplée à la turbine basse pression et une soufflante qui est accouplée à l'arbre basse pression, caractérisée en ce qu'elle comporte un réducteur de vitesse selon l'invention, par l'intermédiaire duquel la soufflante est accouplée à l'arbre basse pression.

### BRÈVE DESCRIPTION DES DESSINS

D'autres caractéristiques et avantages de l'invention apparaîtront à la lecture de la description détaillée qui suit pour la compréhension de laquelle on se reportera aux figures annexées parmi lesquelles :
- la figure 1 est une vue en section axiale partielle d'un réducteur de vitesse de type à train épicycloïdal selon l'art antérieur ;
- la figure 2 est une représentation schématique d'une partie de la face annulaire interne dentée des demi-couronnes représentées à la figure 1, montrant deux orientations possibles de leurs dentures hélicoïdales ;
- la figure 3 est une représentation schématique avec arrachement d'un premier mode de réalisation d'un réducteur de vitesse selon l'invention ;
- les figures 4A à 4C sont des sections axiales du réducteur de vitesse représenté à la figure 3, montrant différents états du réducteur ;
- la figure 5 est une représentation schématique avec arrachement d'un deuxième mode de réalisation d'un réducteur de vitesse selon l'invention ;
- les figures 6A à 6C sont des sections axiales du réducteur de vitesse représenté à la figure 5, montrant différents états du réducteur.

### EXPOSÉ DÉTAILLÉ DE MODES DE RÉALISATION PARTICULIERS

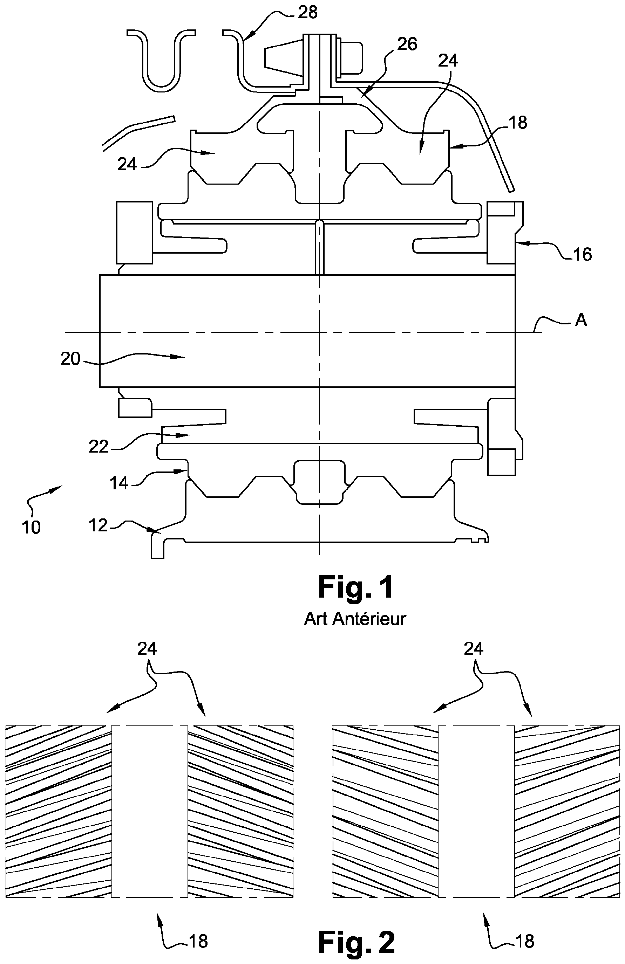

On a représenté à la figure 1 un réducteur de vitesse 10, qui est destiné à être monté dans une turbomachine d'aéronef pour relier un arbre basse pression de la turbomachine à une soufflante de la turbomachine.

Le réducteur de vitesse 10 est du type à train épicycloïdal. Il comporte un pignon planétaire central 12, une pluralité de pignons satellites 14, dont un seul pignon satellite 14 est représenté à la figure 1, un porte satellites 16 sur lequel les pignons satellites 14 sont montés à rotation et une couronne 18 dentée annulaire.

Le pignon planétaire 12 est coaxial à un axe principal du réducteur de vitesse 10, il est accouplé avec chaque pignon satellite 14.

Chaque pignon satellite 14 est mobile en rotation par rapport au porte satellites 16 autour d'un axe A parallèle à l'axe principal du réducteur de vitesse 10. Le porte satellites 16 comporte à cet effet plusieurs axes 20, dont chaque axe 20 est associé à un pignon satellite 14 et qui réalise le guidage en rotation du pignon satellite 14 par rapport au porte satellites 16.

Un palier 22 est disposé entre le pignon satellite 14 et l'axe 20 associé pour limiter les frottements entre ces deux éléments. Il sera compris que tout type de palier 22, ou tout autre moyen de guidage peut être utilisé entre le pignon satellite 14 et l'axe 20 sans sortir du domaine de l'invention.

Aussi, chaque pignon satellite 14 est accouplé à la fois avec le pignon planétaire 12 et la couronne 18.

La couronne 18 comporte à cet effet une denture sur sa face radialement interne pour son accouplement avec chaque pignon satellite 14. Les pignons satellites 14 comportent à cet effet une denture complémentaire.

Les dentures dans le réducteur de vitesse 10 sont en outre conçues pour ne pas générer de contraintes axiales dans le réducteur de vitesse 10, ni sur les éléments auxquels le réducteur de vitesse 10 est connecté.

Comme on peut le voir à la figure 2, les dentures dans le réducteur sont ici des dentures en chevron ou dentures en "V".

La couronne 18 est en outre constituée de deux demi-couronnes 24 qui sont annulaires, coaxiales à l'axe principal du réducteur de vitesse et qui sont décalées l'une par rapport à l'autre selon l'axe principal du réducteur.

Les deux demi-couronnes 24 sont reliées l'une avec l'autre par une platine de support 26. La platine de support 26 est elle-même reliée à un carter 28 fixe de la turbomachine.

Chaque demi-couronne 24 comporte, sur sa face annulaire interne, une denture hélicoïdale. L'inclinaison de la denture d'une demi-couronne est opposée à l'inclinaison de la denture de l'autre demi-couronne 24. Ainsi, comme on peut le voir à la figure 2, le motif formé par les deux dentures est en forme de V, donnant ainsi son nom à ce type de denture.

Chaque pignon satellite 14 engrène avec la couronne 18. Par conséquent, la denture de chaque pignon satellite 14 est une denture en chevron complémentaire de la denture de la couronne 18.

Aussi, chaque pignon satellite 14 engrène avec le pignon planétaire 12, la denture du pignon planétaire 12 est donc elle aussi une denture en chevron complémentaire de la denture des pignons satellites 14.

Chaque pignon satellite 14 exerce sur chaque demi-couronne 24 une action se décomposant en un effort tangentiel, un effort axial orienté parallèlement à l'axe principal du réducteur de vitesse 10 et un effort orienté radialement par rapport à l'axe principal A du pignon satellite 14.

La direction de l'effort axial sur une demi-couronne est définie en fonction de l'orientation de la denture de la demi-couronne 24. Ainsi, comme on peut le voir à la figure 2, pour un effort tangentiel exercé par le pignon satellite 14 sur chaque demi-couronne 24, qui est orienté de bas en haut sur la figure, l'effort axial sur chaque demi-couronne 24 est orienté vers l'extérieur de la couronne 18 sur la vue de gauche et il est orienté vers l'intérieur de la couronne 14 sur la bue de droite.

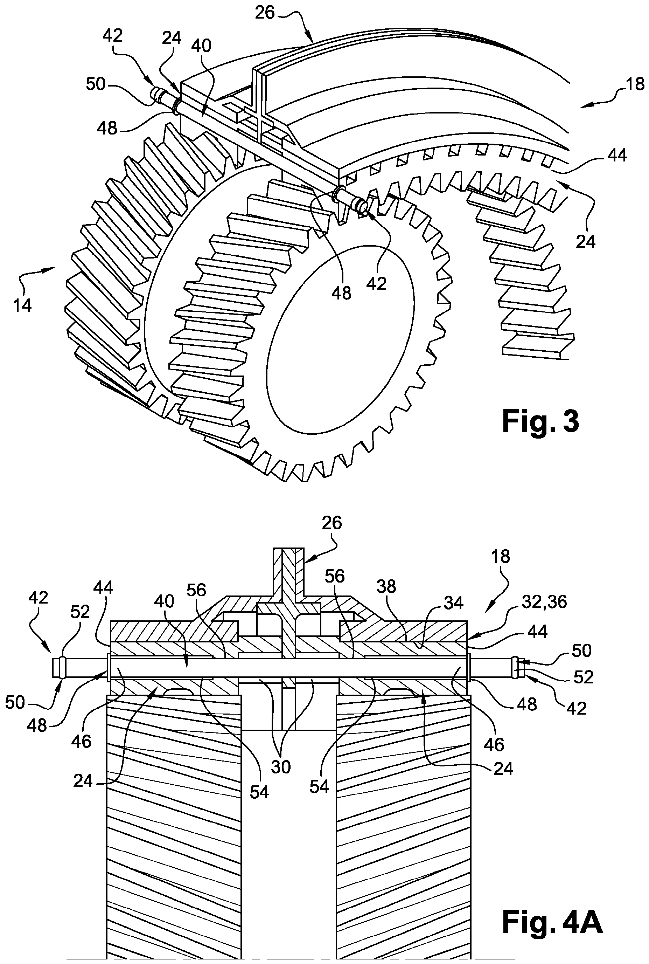

On a représenté aux figures 3 et suivantes deux modes de réalisation d'un réducteur de vitesse 10 qui comporte des moyens de débrayage permettant de réaliser un désaccouplement des pignons satellites 14 d'avec les demi-couronnes 24.

Ce débrayage est prévu pour avoir lieu lorsque les pignons satellites exercent sur les demi-couronnes 24 une action dont l'amplitude est supérieure à une valeur d'amplitude prédéfinie et pour laquelle la direction de l'effort axial est orientée vers l'extérieur du réducteur 10. Dans la description qui va suivre cette action provoquant le débrayage sera appelée action de débrayage.

Ainsi, lorsque les pignons satellites exercent sur les demi-couronnes 24 l'action de débrayage, la valeur de l'effort axial exercé par les pignons satellites 14 sur les demi-couronnes 24 devient supérieure à une valeur d'effort prédéfinie.

De préférence, l'amplitude de l'action de débrayage est déterminée pour correspondre à un blocage d'un composant dans la turbomachine, qui est relié au réducteur de vitesse 10 ou bien d'un composant du réducteur de vitesse 10.

Ce blocage peut être au niveau d'un palier 22, dans un étage basse pression de la turbomachine ou bien dans la soufflante de la turbomachine.

Ainsi, en prévoyant un débrayage du réducteur de vitesse 10, le blocage d'un de ces composant ne nuira pas à l'intégrité des autres composants ni à la manœuvrabilité de l'aéronef sur lequel le réducteur de vitesse 10 est monté.

Le débrayage du réducteur de vitesse 10 consiste à faire coulisser axialement les deux demi-couronnes 24 et en les écartant l'une de l'autre afin qu'elles ne soient plus accouplées avec les pignons satellites 14.

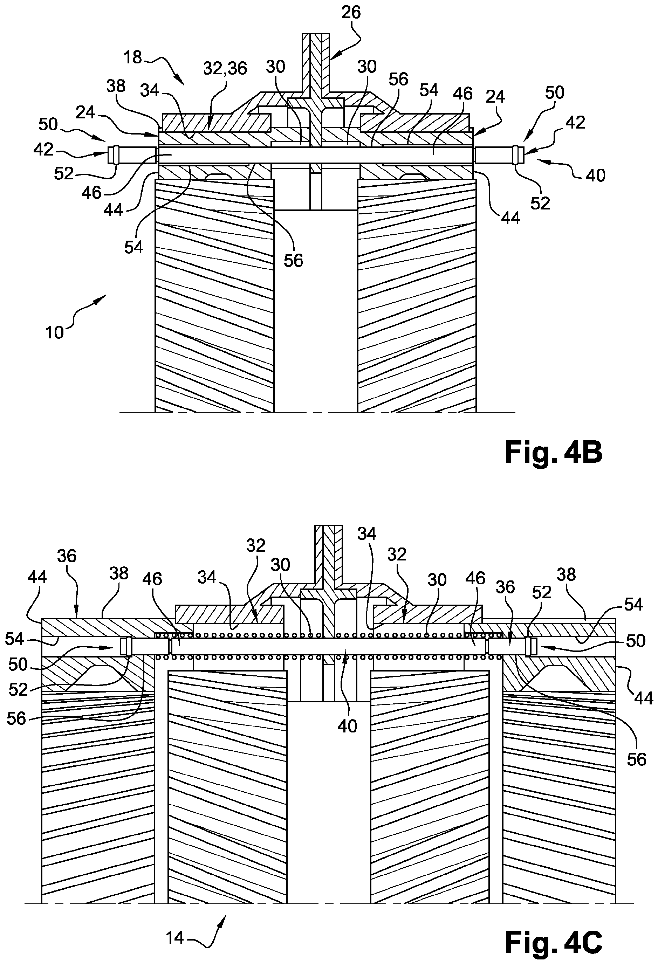

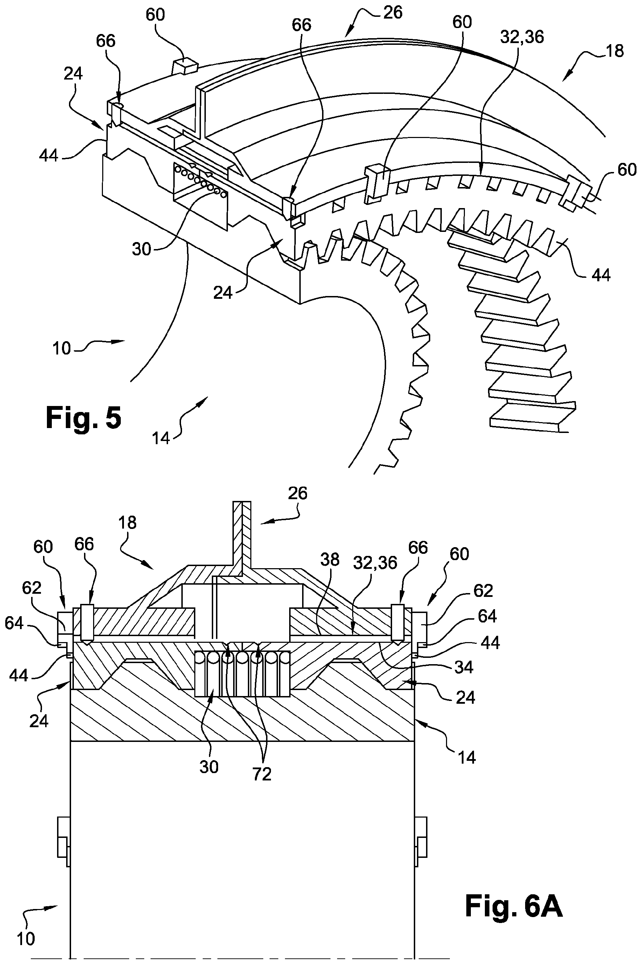

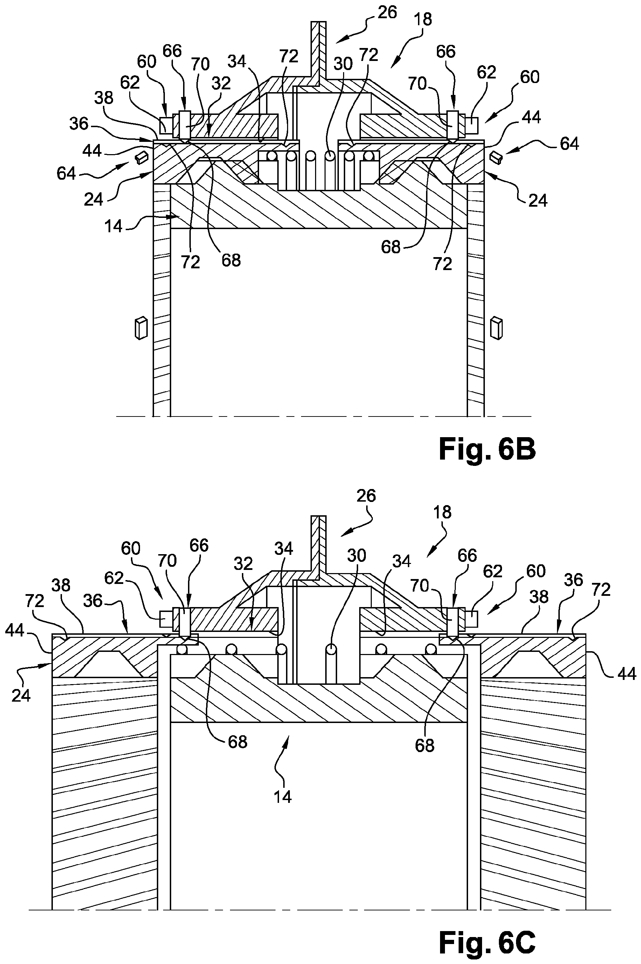

Ainsi, chaque demi-couronne 24 est monté coulissante par rapport à la platine de support 26 selon une direction de coulissement parallèle à l'axe principal du réducteur de vitesse 10, entre une position accouplée, représentée notamment aux figures 4A et 6A, dans laquelle les deux demi-couronnes 24 sont accouplées avec les pignons satellites 14 et une position désaccouplée, représentée aux figures 4C et 6C, dans laquelle les demi-couronnes 24 sont désaccouplées des pignons satellites 14.

Lorsque les demi-couronnes 24 sont dans leur position accouplée, elles sont de préférence en appui axialement l'une contre l'autre ou contre un composant intermédiaire de la platine de support 26.

Chaque demi-couronne 24 est ainsi reliée à la platine de support 26 avec possibilité de coulissement axial par rapport à la platine de support 26.

Le réducteur de vitesse 10 comporte aussi des moyens pour entrainer chaque demi-couronne 24 en déplacement depuis la position accouplée vers la position désaccouplée les pignons satellites 14 exercent l'action de débrayage sur les demi-couronnes 24 et des moyens de retenue de chaque demi-couronne dans la position accouplée lorsque les pignons satellites 14 exercent une action sur chaque demi-couronne 24 dont l'amplitude est inférieure à la valeur d'amplitude prédéfinie.

L'entrainement de chaque demi-couronne 24 en déplacement depuis la position accouplée vers la position désaccouplée est réalisé par l'action des pignons satellites 14 sur la demi-couronne 24. En effet, comme on l'a dit précédemment, du fait de la coopération des dentures hélicoïdales complémentaires de chaque demi-couronne 24 et des pignons satellites 14, les pignons satellites 14 exercent sur chaque demi-couronne 24 une action se décomposant en un effort orienté tangentiellement par rapport à l'axe principal du réducteur de vitesse 10 ,un effort orienté axialement c'est à dire parallèle à l'axe principal du réducteur de vitesse 10 et un effort orienté radialement par rapport à l'axe principal de chaque pignon satellite 14.

En fonction de l'orientation des dentures et en fonction de la direction de l'action exercée par les pignons satellites 14 sur chaque demi-couronne 24, l'effort axial est orienté soit vers l'intérieur de la couronne 18, soit vers l'extérieur de la couronne 18 lors du fonctionnement de la turbomachine.

Par conséquent, lorsque l'action exercée par les pignons satellites 14 sur chaque demi-couronne 24 a pour conséquence que cet effort axial est orienté vers l'extérieur de la couronne 18, (et supérieur à la valeur prédéfinie pour la casse du fusible) cet effort axial permet l'entrainement de chaque demi-couronne 24 vers sa position désaccouplée.

Selon une variante de réalisation, et comme on peut le voir plus en détails aux figures, le réducteur de vitesse 10 comporte des moyens supplémentaires d'entrainement des demi-couronnes 24 en déplacement axial vers la position désaccouplée.

Ici, ces moyens supplémentaires comportent un ressort hélicoïdal 30 qui est comprimé axialement entre chaque demi-couronne 24 et une portion d'appui de la platine de support 26.

Chaque ressort 30 exerce en permanence un effort sur la demi-couronne 24 associée qui est parallèle à l'axe principal du réducteur de vitesse 10 et orienté vers l'extérieur de la couronne 18, c'est-à-dire en direction de la position désaccouplée.

Cet effort supplémentaire exercé par le ressort permet notamment d'accélérer le déplacement de la demi-couronne 24 vers la position désaccouplée.

La liaison de chaque demi-couronne 24 avec la platine de support 26 est réalisée pour immobiliser les demi-couronnes 24 en rotation par rapport à la platine de support 26 autour de l'axe principal du réducteur de vitesse 10, tout en permettant le déplacement axial des demi-couronnes 24.

A cet effet, la platine de support 26 comporte des cannelures 32 réparties sur sa face périphérique interne 34, qui coopèrent avec des cannelures 36 complémentaires réparties sur la face périphérique externe 38 de chaque demi-couronne 24.

Il sera compris que l'invention n'est pas limitée à ce mode de réalisation et que chaque demi-couronne 24 peut être reliée à la platine de support 26 par tout autre moyen comme par exemple par l'intermédiaire d'au moins un ensemble comportant une rainure et une clavette associée.

Le réducteur de vitesse 10 comporte des moyens de retenue de chaque demi-couronne 24 dans sa position accouplée.

Ces moyens de retenue sont réalisés afin de maintenir chaque demi-couronne 24 en position accouplée lorsque le réducteur de vitesse 10 est en conditions de fonctionnement normales et pour ne plus retenir les demi-couronnes 24 lorsqu'un blocage dans la ligne basse pression intervient.

Selon les modes de réalisation représentés aux figures, les moyens de retenue comportent au moins un élément qui est apte à être déformé lorsque les pignons satellite exercent sur chaque demi-couronne 24 l'action de débrayage. Cette déformation de l'élément de retenue peut consister en une déformation élastique, une déformation plastique ou bien une casse de l'élément.

Selon le mode de réalisation représenté aux figures 3 à 4C, les moyens de retenue comportent une tige 40 orientée parallèlement à l'axe principal du réducteur de vitesse 10, qui s'étend axialement de manière à traverser simultanément les deux demi-couronnes 24. Chaque demi-couronne 24 comporte un orifice axial traversant 54 dans lequel la tige 40 est reçue.

La tige 40 s'étend axialement au-delà des demi-couronnes 24, c'est-à-dire que chaque extrémité 42 de la tige 40 fait saillie axialement par rapport à une des deux demi-couronnes 24, au-delà d'une face d'extrémité axiale 44 de la demi-couronne 24, qui est située à l'extérieur axialement de la couronne 18, lorsque les demi-couronnes 24 sont dans leur position accouplée.

La tige 40 comporte aussi un tronçon intermédiaire 46 associé à chaque demi-couronne 24 qui porte l'élément à être déformé.

Cet élément consiste en un organe d'appui 48 qui est en appui contre la face d'extrémité axiale 44 de la demi-couronne 24 associée, et qui maintient la demi-couronne 24 associée dans sa position accouplée.

L'organe d'appui 48 est conçu pour se déformer lorsque la demi-couronne 24 qui lui est associée subit de la part des pignons satellites 14 un effort axial suffisamment important, qui correspond à l'action de débrayage.

Ici, l'organe d'appui 48 consiste en un anneau d'arrêt qui est apte à se déformer de manière permanente, c'est-à-dire qu'il est apte à se déformer plastiquement.

Selon une variante de réalisation, l'organe d'appui 48 consiste en une rondelle élastique qui est reçue dans une gorge associée formée dans le tronçon intermédiaire 46 de la tige 40. L'organe d'appui est ainsi apte à se déformer élastiquement pour sortir de la gorge lorsque l'action provoquant le déplacement des demi-couronnes 24 est exercée.

Une fois que l'organe d'appui 48 s'est déformé, la demi-couronne 24 qui lui est associée peut alors se déplacer vers sa position désaccouplée sous l'action notamment des pignons satellites 14, comme on l'a décrit précédemment.

La tige 40 comporte aussi des moyens de butée 50 contre lesquels chaque demi-couronne 24 vient en butée lorsqu'elle atteint sa position désaccouplée.

Ces moyens de butée 50 sont portés par chaque extrémité 42 de la tige 42 et consistent chacun en une rondelle 52 reçue dans une gorge associée formée dans l'extrémité associée de la tige 50.

Chaque moyen de butée 50 est apte à venir en butée axialement contre la demi-couronne 24.

Ici, chaque moyen de butée 50 est apte à venir en butée contre un épaulement 56 formé dans l'orifice 54 de la demi-couronne 24 associée. Ce mode de réalisation permet de limiter la longueur axiale de la tige 40 et ainsi de limiter l'encombrement axial total du réducteur de vitesse 10.

Aussi, grâce à cet appui de chaque moyen de butée 50 contre un épaulement, les demi-couronnes 24 restent reliées au à la platine de support 26, même après leur désaccouplement d'avec les pignons satellites 14, ce qui permet ainsi d'éviter qu'elles soient éjectées et puissent casser un autre élément

Selon une variante de réalisation (non représentée), chaque moyen de butée 50 est apte à venir en butée contre la face d'extrémité axiale 44 de la demi-couronne 24 associée.

Dans le mode de réalisation qui vient d'être décrit, les moyens de retenue comportent une seule tige 40 traversant les deux demi-couronnes 24.

Il sera compris que l'invention n'est pas limitée à ce mode de réalisation et que le réducteur de vitesse 10 peut comporter une pluralité de tiges 40 similaires à celle qui vient d'être décrite, qui sont réparties de manière régulière autour de l'axe principal du réducteur de vitesse 10 et qui coopèrent toutes avec les deux demi-couronnes 24 de la même façon, pour maintenir les demi-couronnes 24 dans la position accouplée lors du fonctionnement normal du réducteur de vitesse 10 et pour permettre le déplacement des demi-couronnes 24 vers leur position désaccouplée dans le cas d'un effort sur les demi couronnes 24 dont l'amplitude est importante.

Ainsi, comme on peut le voir à la figure 4A, lorsque le réducteur de vitesse 10 est en condition normale de fonctionnement, les demi-couronnes 24 sont dans leur position axiale accouplées avec les pignons satellites 14. L'action des pignons satellites 14 sur les demi-couronnes 24 comprend un effort axial dont la valeur est inférieure à la valeur d'amplitude prédéfinie précédemment.

L'orientation de l'action exercée par les pignons satellites 14 a alors pour conséquence soit de maintenir chaque demi-couronne 24 en appui axialement contre l'autre demi-couronne 24, soit de mettre en appui chaque demi-couronne 24 contre l'organe d'appui 48 qui lui est associé et qui est porté par la tige 40. L'amplitude de l'action étant inférieure à la d'amplitude prédéfinie, l'organe d'appui 48 ne se déforme pas, maintenant ainsi la demi-couronne 24 dans sa position accouplée.

Comme on peut le voir à la figure 4B, lorsque l'amplitude de l'action exercée par les pignons satellites 14 sur les demi-couronnes devient suffisamment importante pour que cette action soit une action de débrayage, l'organe d'appui 48 se déforme, permettant alors le déplacement axial des demi-couronnes 24 vers leur position désaccouplée.

Pendant son déplacement, chaque demi-couronne 24 est encore accouplée avec les pignons satellites 14, ce qui permet notamment aux pignons satellites 14 d'entrainer la demi-couronne 24 vers sa position désaccouplée pendant la totalité de ce déplacement.

Enfin, lorsque chaque demi-couronne 24 atteint sa position désaccouplée représentée à la figure 4C, les demi-couronnes 24 ne sont plus accouplées avec les pignons satellites 14, réalisant ainsi la fonction de fusible mécanique dans le réducteur de vitesse 10.

Dans cette position, chaque rondelle 52 des moyens de butée 50 est en butée contre l'épaulement 56 formé dans l'orifice 54 de la demi-couronne 24 associée.

Les ressorts 30 permettent en outre de maintenir les demi-couronnes 24 dans leur position désaccouplée, évitant ainsi tout engrènement non voulu des demi-couronnes 24 avec les pignons satellites 14.

On a représenté aux figures 5, 6A à 6C un autre mode de réalisation du réducteur de vitesse dans lequel les moyens de retenue comportent au moins une butée fusible 60 associée à chaque demi-couronne 24 et contre laquelle chaque demi-couronne 24 est en appui axialement vers l'extérieur de la couronne 18 lorsque la demi-couronne 24 est dans sa position accouplée.

De préférence, les moyens de retenue comportent une pluralité de butées fusibles 60 réparties de manière régulière autour de l'axe principal du réducteur de vitesse 10.

Chaque butée fusible 60 est portée par la platine de support 26 et est en appui contre la face d'extrémité axiale 44 de la demi-couronne 24 associée. Elle comporte une portion de fixation 62 de la butée fusible 60 à la platine de support 26 et une portion d'appui 64 de la butée fusible 60 contre ladite face d'extrémité axiale 44 de la demi-couronne 24.

Les deux portions 62, 64 de la butée fusible 60 sont reliées entre elles par une portion de faible résistance à la rupture qui est apte à rompre lorsque les pignons satellites 14 exercent sur les demi-couronnes 24 ladite action de débrayage.

Lorsque la portion de faible résistance à la rupture de la butée fusible 60 s'est rompue, la portion d'appui 64 s'est désolidarisée de la portion de fixation 62, la demi-couronne 24 associée à la butée fusible 60 n'est alors plus retenue axialement dans la position accouplée, elle peut alors se déplacer vers la position désaccouplée.

Les moyens de retenue comportent aussi un système de butée à bille 66 associé à chaque demi-couronne 24 et qui est réalisé pour maintenir la demi-couronne 24 associée dans chacune de la position accouplée ou de la position désaccouplée.

Ici, le système de butée à bille 66 comporte une bille 68 qui est portée par la platine de support 26 et qui est montée mobile radialement, par rapport à l'axe principal du réducteur de vitesse, par rapport à la platine de support 26.

La bille 68 est guidée en déplacement par rapport à la platine de support 26 par un cylindre de guidage 70 orienté radialement par rapport à l'axe principal du réducteur de vitesse 10 qui est monté dans un orifice radial associé formé dans la platine de support 26. Un ressort de compression est agencé dans le cylindre de guidage pour forcer la bille 68 vers une position déployée

Chaque demi-couronne 24 comporte deux cavités 72 avec l'une ou l'autre desquelles la bille 68 est destinée à coopérer lorsque la demi-couronne 24 est dans l'une ou l'autre de la position accouplée ou de la position désaccouplée.

Ici, selon un mode de réalisation préféré, les deux cavités 72 sont formées dans le fond d'une gorge en creux de la cannelure 36 de la demi-couronne 24 et la bille 68, le cylindre de guidage 70 et le ressort d'appui sont portés par une dent de la cannelure 32 associée appartenant à la platine de support 26.

Ainsi, comme on peut le voir à la figure 6A, lorsque le réducteur de vitesse 10 est en conditions normales de fonctionnement, chaque demi-couronne 24 est dans sa position accouplée. L'amplitude de l'action exercée par les pignons satellites 14 sur les demi-couronnes 24 un est inférieure à la valeur d'amplitude prédéfinie mentionnée précédemment.

Chaque bille 68 est en outre reçue dans une cavité 72 qui correspond à la position accouplée.

L'orientation de l'action exercée par les pignons satellites 14 a alors pour conséquence soit de maintenir chaque demi-couronne 24 en appui axialement contre l'autre demi-couronne 24, soit de mettre en appui chaque demi-couronne 24 contre la butée fusible 60 qui lui est associée L'amplitude de l'action étant inférieure à la d'amplitude prédéfinie, la butée fusible 60 ne se rompt pas, maintenant ainsi la demi-couronne 24 dans sa position accouplée.

De plus, la butée à bille 66 coopère avec la butée fusible 60 pour maintenir la demi-couronne 24 dans sa position accouplée.

Comme on peut le voir à la figure 6B, lorsque l'amplitude de l'action exercée par les pignons satellites 14 sur les demi-couronnes devient suffisamment importante pour que cette action soit une action de débrayage, la portion à faible résistance de chaque butée fusible 60 rompt et chaque bille 68 sort de la cavité associée, permettant alors le déplacement axial des demi-couronnes 24 vers leur position désaccouplée.

Pendant ce déplacement, chaque demi-couronne 24 est encore accouplée avec les pignons satellites 14, ce qui permet notamment aux pignons satellites 14 d'entrainer les demi-couronnes 24 vers leur position désaccouplée pendant la totalité de ce déplacement.

Enfin, lorsque chaque demi-couronne 24 atteint sa position désaccouplée représentée à la figure 4C, les demi-couronnes 24 ne sont plus accouplées avec les pignons satellites 14, afin d'assurer la fonction de fusible mécanique dans le réducteur de vitesse 10.

Dans cette position, les billes 68 sont reçues dans les deuxièmes cavités 72 associées, ce qui permet, en association avec les ressorts 30, de maintenir les demi-couronnes 24 dans leur position désaccouplée, évitant ainsi tout engrènement non voulu des demi-couronnes 24 avec les pignons satellites 14.

Quel que soit le mode de réalisation du réducteur de vitesse 10, lorsque les demi-couronnes 24 sont dans leur position accouplée, elles sont fixées à la platine de support 26 par l'intermédiaire des cannelures 32, 36 et des moyens de retenue.

Par conséquent, les différents composants de la couronne 18 forment un sous-ensemble rigide. Il n'y a donc pas de souplesse induite par la fonction de fusible mécanique dans le réducteur de vitesse 10.

De plus, la majeure partie des composants permettant d'assurer cette fonction de fusible mécanique dans le réducteur de vitesse 10 sont incorporés aux composants de la couronne, que ce soit dans les demi-couronnes 24 ou dans la platine de support 26.

Il en résulte qu'en fonctionnement normal, l'encombrement total du réducteur de vitesse 10 n'est que peu augmenté par rapport à l'encombrement d'un réducteur de vitesse conventionnel comportant pas la fonction de fusible mécanique.

## Revendications

1. Réducteur de vitesse (10), en particulier pour la transmission de couple entre une turbine à gaz et une soufflante dans une turbomachine, comportant
une couronne (18) annulaire coaxiale à un axe principal du réducteur de vitesse (10) et présentant une denture radialement interne,
au moins un pignon (14) qui est accouplé avec la couronne (18) et qui comporte une denture radialement externe complémentaire de la denture de la couronne (18) annulaire,
dans lequel la couronne (18) comporte deux demi-couronnes (24) annulaires décalées l'une par rapport à l'autre le long de l'axe principal du réducteur de vitesse (10) et qui sont accouplées avec ledit au moins un pignon (14), et une platine de support (26) des deux demi-couronnes (24), par rapport à laquelle les deux demi-couronnes (24) sont immobiles en rotation autour de l'axe principal du réducteur de vitesse (10), chaque demi-couronne (24) comportant une denture interne hélicoïdale inclinée dans une direction opposée à la direction d'inclinaison de la denture de l'autre demi-couronne (24),
dans lequel chaque demi-couronne (24) est reliée à la platine de support (26) de manière à pouvoir être désaccouplée dudit au moins un pignon (14) lorsque ledit au moins un pignon (14) exerce sur chaque demi-couronne (24) une action de débrayage dont l'amplitude est supérieure à une valeur d'amplitude déterminée., **caractérisé en ce que** chaque demi-couronne (24) est montée coulissante par rapport à la platine de support (26), selon une direction parallèle à l'axe principal du réducteur de vitesse (10), entre une position accouplée dans laquelle ladite demi-couronne (24) est accouplée avec ledit au moins un pignon (14) et une position désaccouplée dans laquelle ladite demi-couronne (24) est désaccouplée dudit au moins un pignon (14),
et **en ce que** le réducteur de vitesse (10) comporte des moyens de retenue (48, 60) de ladite demi-couronne (24) dans sa position accouplée, lesdits moyens de retenue (48, 60) étant aptes à être désengagés pour permettre un déplacement de ladite demi-couronne (24) vers la position désaccouplée lorsque ledit au moins un pignon (14) exerce sur chaque demi-couronne (24) ladite action de débrayage.

2. Réducteur de vitesse (10) selon la revendication 1, **caractérisé en ce que** les moyens de retenue comportent au moins un organe d'appui (48, 60) associé à chaque demi-couronne (24), qui est en appui axialement contre une face d'appui (44) de la demi-couronne (24) qui lui est associée, et qui est apte à changer d'état lorsque ledit au moins un pignon (14) exerce sur la demi-couronne (24) ladite action de débrayage.

3. Réducteur de vitesse (10) selon la revendication précédente, **caractérisé en ce que** l'organe d'appui consiste en un anneau d'arrêt (48) déformable associé à chaque demi-couronne (24), qui est en appui contre ladite face d'appui (44) de la demi-couronne (24) qui lui est associée et qui est porté par une tige (40) orientée parallèlement à l'axe principal du réducteur de vitesse (10) et qui traverse un orifice (54) axial réalisé dans les deux demi-couronnes (24),

4. Réducteur de vitesse (10) selon la revendication 2, **caractérisé en ce que** l'organe d'appui comporte une butée fusible (60) qui est apte se rompre lorsque ledit au moins un pignon (14) exerce sur la demi-couronne (24) ladite action.

5. Réducteur de vitesse (10) selon la revendication 4, **caractérisé en ce que** la butée fusible (60) comporte une portion de fixation (62) de la butée fusible (60) à la platine de support (26) et une portion d'appui (64) de la butée fusible (60) contre ladite face d'appui (44) de la demi-couronne (24).

6. Réducteur de vitesse (10) selon l'une quelconque des revendications 1 à 5, **caractérisé en ce que** les moyens de retenue comportent un organe de butée (50, 66) associé à chaque demi-couronne (24), qui est apte à coopérer avec la demi-couronne (24) associée lorsqu'elle est dans sa position désaccouplée.

7. Réducteur de vitesse (10) selon la revendication 6, en combinaison avec la revendication 3, **caractérisé en ce que** l'organe de butée comporte une rondelle (50) reçue dans une gorge (52) associée formée dans une extrémité (42) de la tige (40) associée à ladite demi-couronne (24).

8. Réducteur de vitesse (10) selon la revendication 6, en combinaison avec la revendication 4 ou 5, **caractérisé en ce que** l'organe de butée comporte au moins une butée à bille (66) agencée dans une cannelure (32) de la platine de support (26), qui est apte à coopérer avec la demi-couronne (24) associée lorsqu'elle est dans l'une de la position désaccouplée et de la position accouplée.

9. Réducteur de vitesse (10) selon l'une quelconque des revendications 1 à 8, **caractérisé en ce que** l'inclinaison de la denture dudit au moins un pignon et de chaque demi-couronne (24) est défini pour que chaque demi-couronne (24) est entraînée en déplacement vers sa position désaccouplée par l'intermédiaire de l'effort axial résultant de l'action dudit au moins un pignon (14) sur la denture hélicoïdale de la demi-couronne (24).

10. Réducteur de vitesse (10) selon la revendication précédente, **caractérisé en ce qu'**il comporte des moyens supplémentaires (30) d'entrainement de chaque demi-couronne (24) en déplacement vers sa position désaccouplée.

11. Réducteur de vitesse (10) selon la revendication précédente, **caractérisé en ce que** lesdits moyens supplémentaire d'entrainement comportent un ressort de compression (30) qui est comprimé axialement entre les deux demi-couronnes (24).

12. Réducteur de vitesse (10) selon l'une quelconque des revendications précédentes, **caractérisé en ce qu'**il consiste en un réducteur du type à train épicycloïdal et **en ce que** ladite couronne (18) est la couronne annulaire externe du train épicycloïdal et ledit au moins un pignon (14) consiste en une pluralité de pignons (14) satellites reliés les uns aux autres par un porte satellites (16).

13. Turbomachine d'aéronef comportant une turbine basse pression, un arbre basse pression qui est accouplée à la turbine basse pression et une soufflante qui est accouplée à l'arbre basse pression, **caractérisé en ce que** elle comporte un réducteur de vitesse (10) selon l'une quelconque des revendications précédentes, par l'intermédiaire duquel la soufflante est accouplée à l'arbre basse pression.

## Patentansprüche

1. Untersetzungsgetriebe (10), insbesondere zur Drehmomentübertragung zwischen einer Gasturbine und einem Gebläse in einer Turbomaschine,
mit einem zu einer Hauptachse des Untersetzungsgetriebes (10) koaxialen Zahnkrone (18) mit radialer Innenverzahnung,
mindestens einem mit der Zahnkrone (18) gekoppelten Ritzel (14) mit radialer Außenverzahnung, die komplementär zur Verzahnung der Zahnkrone (18) ist,
wobei die Zahnkrone (18) zwei ringförmige Halbkronen (24) umfasst, die entlang der Hauptachse des Untersetzungsgetriebes (10) gegeneinander versetzt sind und mit dem mindestens einen Ritzel (14) gekoppelt sind, und eine Trägerplatte (26) für die beiden Halbkronen (24), in Bezug auf die die beiden Halbkronen (24) daran gehindert werden, sich um die Hauptachse des Untersetzungsgetriebes (10) zu drehen, wobei jede Halbkrone (24) innere schraubenförmige Zähne aufweist, die in einer Richtung geneigt sind, die der Neigungsrichtung der Zähne der anderen Halbkrone (24) entgegengesetzt ist,
wobei jede Halbkrone (24) mit der Trägerplatte (26) so verbunden ist, dass sie von dem mindestens einen Kettenrad (14) abgekoppelt werden kann, wenn das mindestens eine Kettenrad (14) auf jede Kettenradhälfte (24) eine Ausrückwirkung ausübt deren Amplitude größer als ein vorbestimmter Amplitudenwert ist, **dadurch gekennzeichnet, dass** jede Halbkrone (24) in Bezug auf die Trägerplatte (26) in einer Richtung parallel zur Hauptachse des Untersetzungsgetriebes (10) verschiebbar angebracht ist, zwischen einer gekoppelten Position, in der die Halbkrone (24) mit dem mindestens einen Ritzel (14) gekoppelt ist, und einer entkoppelten Position, in der die Halbkrone (24) von dem mindestens einen Ritzel (14) entkoppelt ist,
und dass das Untersetzungsgetriebe (10) Mittel zum Zurückhalten (48, 60) der Halbkrone (24) in seiner gekoppelten Position enthält, wobei die Rückhaltemittel (48, 60) ausrückbar sind, um eine Bewegung der Halbkrone (24) in die entkoppelte Position zu ermöglichen, wenn das mindestens eine Ritzel (14) auf jede Halbkrone (24) die genannte Ausrückwirkung ausübt.

2. Untersetzungsgetriebe (10) nach Anspruch 1, **dadurch gekennzeichnet, dass** die Rückhaltemittel mindestens ein Stützelement (48, 60) umfassen, das mit jede Halbkrone (24) verbunden ist, die axial eine Auflagefläche (44) der ihr zugeordneten Halbkrone (24) stützt und die ihren Zustand ändern kann, wenn das mindestens einem Ritzel (14) die genannte Ausrückwirkung auf die Halbkrone (24) ausübt.

3. Untersetzungsgetriebe (10) nach dem vorhergehenden Anspruch, **dadurch gekennzeichnet, dass** das Stützelement aus einem verformbaren Anschlagring (48) besteht, der jeder Halbkugel (24), die die genannte Auflagefläche der ihr zugeordneten Halbkugel (24) stützt, und der von einer Stange (40) getragen wird, die parallel zur Hauptachse des Untersetzungsgetriebes (10) ausgerichtet ist und die durch eine in den beiden Halbkronen (24) ausgebildete axiale Öffnung (54) verläuft,

4. Untersetzungsgetriebe (10) nach Anspruch 2, **dadurch gekennzeichnet, dass** das Stützelement einen schmelzbaren Anschlag (60) aufweist, der brechen kann, wenn das mindestens eine Ritzel (14) diese Wirkung auf die Halbkrone (24) ausübt.

5. Untersetzungsgetriebe (10) nach Anspruch 4, **dadurch gekennzeichnet, dass** der schmelzbaren Anschlag (60) einen Abschnitt zum Befestigen (62) des schmelzbaren Anschlags (60) an der Trägerplatte (26) und einen Abschnitt zum Drücken (64) des schmelzbaren Anschlags (60) gegen die Auflagefläche (44) der Halbkrone (24) umfasst.

6. Untersetzungsgetriebe (10) nach einem der Ansprüche 1 bis 5, **dadurch gekennzeichnet, dass** die Rückhaltemittel ein jeder Halbkrone (24) zugeordnetes Anschlagelement (50, 66) umfassen, das geeignet ist, mit der zugeordneten Halbkrone (24) zusammenzuwirken, wenn sie sich in ihrer entkoppelten Position befindet.

7. Untersetzungsgetriebe (10) nach Anspruch 6, in Kombination mit Anspruch 3, **dadurch gekennzeichnet, dass** das Anschlagelement eine Unterlegscheibe (50) umfasst, die in einer zugehörigen Nut (52) aufgenommen wird, die in einem Endpunkt (42) der mit der genannten Halbkrone (24) verbundenen Stange (40) ausgebildet wurde.

8. Untersetzungsgetriebe (10) nach Anspruch 6, in Kombination mit dem Anspruch 4 oder 5, **dadurch gekennzeichnet, dass** das Anschlagelement mindestens einen Kugelanschlag (66) umfasst, der in einer Nut (32) der Trägerplatte (26) angeordnet ist und mit der zugehörigen Halbkrone (24) zusammenwirken kann, wenn sie sich entweder in der entkoppelten oder in der gekoppelten Position befindet.

9. Untersetzungsgetriebe (10) nach einem der Ansprüche 1 bis 8, **dadurch gekennzeichnet, dass** die Neigung der Verzahnung des mindestens einen Ritzels und jedes Halbkranzes (24) so definiert ist, dass jede Halbkrone (24) durch die axiale Kraft, die sich aus der Einwirkung des mindestens einen Ritzels (14) auf die Schrägverzahnung der Halbkrone (24) ergibt, in Richtung seiner entkoppelten Position verschoben wird.

10. Untersetzungsgetriebe (10) nach dem vorhergehenden Anspruch, **dadurch gekennzeichnet, dass** es zusätzliche Mittel (30) für den Antrieb jeder Halbkrone (24) umfasst und sich dabei in ihre entkoppelte Position bewegt.

11. Untersetzungsgetriebe (10) nach dem vorhergehenden Anspruch, **dadurch gekennzeichnet, dass** die zusätzlichen Antriebsmittel eine Druckfeder (30) umfassen, die axial zwischen den beiden Halbkronen (24) zusammengedrückt wird.

12. Untersetzungsgetriebe (10) nach einem der vorhergehenden Ansprüche, **dadurch gekennzeichnet, dass** es aus einem Untersetzungsgetriebe des Typs Umlaufrädergetriebe besteht und dass die genannte Krone (18) die äußere ringförmige Krone des Umlaufrädergetriebes ist und das mindestens ein Ritzel (14) aus einer Vielzahl von Satellitenritzeln (14) besteht, die durch einen Satellitenträger (16) miteinander verbunden sind.

13. Eine Flugzeugturbomaschine mit einer Niederdruckturbine, eine Niederdruckwelle, die mit der Niederdruckturbine und einen Ventilator, der mit der Niederdruckwelle gekoppelt ist, **dadurch gekennzeichnet, dass** der Ventilator eine ein Untersetzungsgetriebe (10) gemäß einem der vorhergehenden Ansprüche umfasst, durch die der Ventilator mit der Niederdruckwelle verbunden ist.

## Claims

1. A speed reducer (10), in particular for torque transmission between a gas turbine and a fan in a turbomachine, including
an annular ring gear (18) coaxial to a main axis of the speed reducer (10) and having radially inner teeth,
at least one gear (14) which is coupled with the ring gear (18) and which includes radially outer teeth complementary to the teeth of the annular ring gear (18),
wherein the ring gear (18) includes two annular half-ring gears (24) offset with respect to each other along the main axis of the speed reducer (10) and which are coupled with said at least one gear (14), and a support plate (26) for supporting both half-ring gears (24), with respect to which both half-ring gears (24) are rotatably immovable about the main axis of the speed reducer (10), each half-ring gear (24) including helical inner teeth tilted in a direction opposite to the tilt direction of the teeth of the other half-ring gear (24),
wherein each half-ring gear (24) is connected to the support plate (26) so as to be able to be uncoupled from said at least one gear (14) when said at least one gear (14) exerts on each half-ring gear (24) an unclutching action the amplitude of which is higher than a determined amplitude value,
**characterised in that** each half-ring gear (24) is slidably mounted with respect to the support plate (26), along a direction parallel to the main axis of the speed reducer (10), between a coupled position in which said half-ring gear (24) is coupled with said at least one gear (14) and an uncoupled position in which said half-ring gear (24) is uncoupled from said at least one gear (14),
and **in that** the speed reducer (10) includes retaining means (48, 60) for retaining said half-ring gear (24) in its coupled position, said retaining means (48, 60) being able to be disengaged to enable said half-ring gear (24) to be moved to the uncoupled position when said at least one gear (14) exerts on each half-ring gear (24) said unclutching action.

2. The speed reducer (10) according to claim 1, **characterised in that** the retaining means include at least one abutting member (48, 60) associated with each half-ring gear (24), which axially abuts against an abutting face (44) of the half-ring gear (24) associated therewith, and which is able to change state when said at least one gear (14) exerts on the half-ring gear (24) said unclutching action.

3. The speed reducer (10) according to the preceding claim, **characterised in that** the abutting member consists of a deformable stop ring (48) associated with each half-ring gear (24), which abuts against said abutting face (44) of the half-ring gear (24) associated therewith and which is carried by a rod (40) oriented parallel to the main axis of the speed reducer (10) and which passes through an axial port (54) made in both half-ring gears (24).

4. The speed reducer (10) according to claim 2, **characterised in that** the abutting member includes a fusible thrust bearing (60) which is able to be ruptured when said at least one gear (14) exerts on the half-ring gear (24) said action.

5. The speed reducer (10) according to claim 4, **characterised in that** the fusible thrust bearing (60) includes an attachment portion (62) for attaching the fusible thrust bearing (60) to the support plate (26) and an abutting portion (64) for abutting the fusible thrust bearing (60) against said abutting face (44) of the half-ring gear (24).

6. The speed reducer (10) according to any of claims 1 to 5, **characterised in that** the retaining means include a thrust bearing member (50, 66) associated with each half-ring gear (24), which is able to cooperate with the associated half-ring gear (24) when it is in its uncoupled position.

7. The speed reducer (10) according to claim 6, in combination with claim 4, **characterised in that** the thrust bearing member includes a washer (50) received in an associated groove (52) formed in one end (42) of the rod (40) associated with said half-ring gear (24).

8. The speed reducer (10) according to claim 6, in combination with claim 5 or 6, **characterised in that** the thrust bearing member includes at least one ball thrust bearing (66) arranged in a spline (32) of the support plate (26), which is able to cooperate with the associated half-ringgear (24) when it is in one of the uncoupled position and the coupled position.

9. The speed reducer (10) according to any of claims 1 to 8, **characterised in that** each half-ring gear (24) is movably driven to its uncoupled position through the axial force resulting from the action of said at least one gear (14) on the helical teeth of the half-ring gear (24).

10. The speed reducer (10) according to the preceding claim, **characterised in that** it includes further means (30) for movably driving each half-ring gear (24) to its uncoupled position.

11. The speed reducer (10) according to the preceding claim, **characterised in that** said further driving means include a compression spring (30) which is axially compressed between both half-ring gears (24).

12. The speed reducer (10) according to any of the preceding claims, **characterised in that** it consists of a planetary gearset type reducer and **in that** said ring gear (18) is the outer annular ring gear of the gearset and said at least one gear (14) consists of a plurality of planet gears (14) connected to each other by a planet carrier (16).

13. An aircraft turbomachine including a low pressure turbine, a low pressure shaft which is coupled with the low pressure turbine and a fan which is coupled with the low pressure shaft, **characterised in that** it includes a speed reducer (10) according to any of the preceding claims, through which the fan is coupled with the low pressure shaft.
